# FASCICULE DE BREVET EUROPEEN

(11) **EP 3 708 452 B1**
(45) Date de publication et mention de la délivrance du brevet: **22.12.2021**
(21) Numéro de dépôt: 20162637.1
(22) Date de dépôt: 12.03.2020
(51) Int. Cl.: B61D 17/10

(54) **HABILLAGE INTÉRIEUR DE VOITURE DE VÉHICULE, NOTAMMENT DE VÉHICULE FERROVIAIRE**
INNENVERKLEIDUNG EINES WAGGONS, INSBESONDERE EINES SCHIENENFAHRZEUGS
INTERIOR TRIM OF A VEHICLE CAR, IN PARTICULAR OF A RAILWAY VEHICLE

(30) Priorité: 12.03.2019 FR 1902509
(43) Date de publication de la demande: 16.09.2020
(73) Titulaire: ALSTOM Transport Technologies, 93400 Saint-Ouen (FR)
(72) Inventeur: LARGENTON, Loïc, 17440 Aytre (FR); GERGAUD, Didier Félix Eugène, 17290 Aigrefeuille d'Aunis (FR); YAKUBOVICH-HUGON, Tatiana, 17000 La Rochelle (FR)
(74) Mandataire: Lavoix

(56) Documents cités:
- EP-A1- 1 942 039
- EP-A1- 3 081 449
- FR-A1- 2 613 995
- FR-A1- 2 692 541
- FR-A1- 2 914 609

## Description

La présente invention concerne un habillage intérieur de voiture de véhicule, notamment de véhicule ferroviaire.

On connait déjà, dans l'état de la technique, un habillage en plusieurs parties rapportées sur un châssis de voiture de véhicule ferroviaire. Plus particulièrement, l'habillage comporte notamment une partie de plancher, une partie d'habillage de parois latérales, une partie d'habillage de sièges, toutes distinctes les unes des autres.

Des exemples d'habillages intérieurs sont décrits dans FR 2 914 609, EP 3 081 449 ou EP 1 942 039.

La présente invention a notamment pour but de simplifier le montage d'un tel habillage.

A cet effet, l'invention a notamment pour objet un habillage d'intérieur de voiture de véhicule, notamment de véhicule ferroviaire, destiné à recouvrir au moins partiellement un châssis de ladite voiture de véhicule, le châssis comportant une première partie structurelle formant un plancher et une seconde partie structurelle destinée à supporter au moins un siège, caractérisé en ce que l'habillage comporte une coque moulée d'un seul tenant, la coque comportant une première partie d'habillage de plancher et une seconde partie d'habillage de sièges.

L'invention propose un habillage formé d'une coque d'un seul tenant, réalisant l'habillage du plancher, des sièges et des parois latérale. Cet habillage permet donc de réduire le nombre de pièces, et donc de simplifier les opérations de montage, et de réduire les délais de fabrication. En outre, la coque d'un seul tenant permet de s'affranchir d'interfaces entre les parties d'habillage, et donc de s'affranchir des problèmes associés à de telles interfaces, notamment de problèmes de défauts de fabrication et de défauts d'étanchéité.

Un habillage selon l'invention peut comporter en outre l'une ou plusieurs des caractéristiques suivantes, prises seules ou selon toutes combinaisons techniquement envisageables.
- La coque comporte une troisième partie d'habillage de parois latérales.
- La coque est réalisée en un matériau composite.
- La coque est dimensionnée pour recouvrir l'intégralité du châssis de la voiture de véhicule, notamment de véhicule ferroviaire.
- L'habillage intérieur comporte au moins un élément fonctionnel porté par la coque.
- Chaque élément fonctionnel est choisi parmi : une couche d'isolant thermique destinée à recouvrir la première partie structurelle du châssis, et/ou la seconde partie structurelle du châssis, et/ou une troisième partie structurelle du châssis ; une couche d'isolant phonique destinée à recouvrir la première partie structurelle et/ou la seconde partie structurelle du châssis, et/ou la troisième partie structurelle du châssis ; un renfort de plancher, destiné à recouvrir la première partie structurelle du châssis ; des renforts de siège, destinés à recouvrir la seconde partie structurelle du châssis.
- La coque comporte des sièges des passagers et/ou présente des zones de réception de sièges et/ou de banquettes.

L'invention concerne également une voiture de véhicule, notamment de véhicule ferroviaire, comprenant un châssis, caractérisée en ce qu'elle comporte un habillage intérieur tel que défini précédemment, recouvrant le châssis.

De préférence, le véhicule ferroviaire est un véhicule de transport urbain et/ou périurbain, notamment un tramway ou un métro.

L'invention concerne enfin un procédé d'aménagement intérieur d'une voiture de véhicule, notamment de véhicule ferroviaire, la voiture de véhicule comprenant un châssis, le procédé comprenant les étapes suivantes :
- fourniture d'un habillage intérieur tel que défini précédemment ;
- assemblage de l'habillage intérieur sur le châssis.

D'autres aspects et avantages de l'invention seront mis en lumière à la lecture de la description qui va suivre, donnée uniquement à titre d'exemple non limitatif et faite en se référant aux figures annexées, parmi lesquelles :
- [Fig 1] La figure 1 est une vue en perspective d'un châssis de voiture de véhicule ferroviaire ;
- [Fig 2] La figure 2 est une vue en perspective d'un habillage intérieur selon un exemple de mode de réalisation de l'invention ; et
- [Fig 3] La figure 3 est une vue en perspective de l'habillage intérieur de la figure 2, recouvrant le châssis de la figure 1.

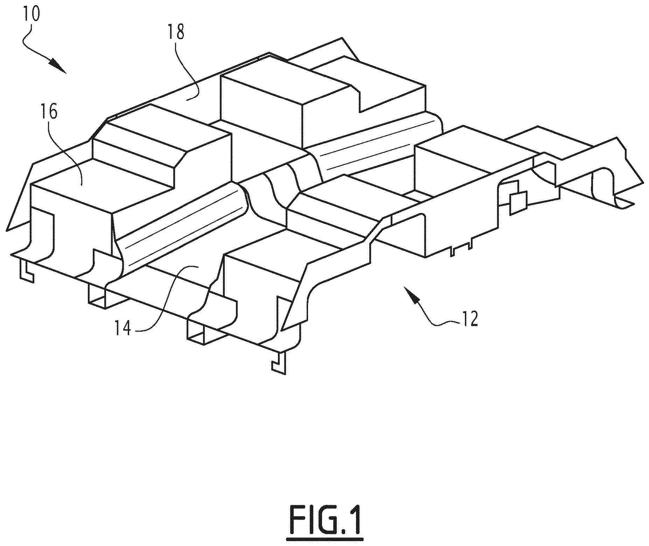

On a représenté, sur la figure 1, un châssis 10 d'une voiture de véhicule ferroviaire. En variante, le véhicule est un bus.

Le véhicule ferroviaire est de préférence un véhicule ferroviaire urbain et/ou périurbain, tel qu'un tramway ou un métro. Un tel véhicule ferroviaire urbain et/ou périurbain est dit de type « léger », au contraire d'un véhicule ferroviaire grandes-lignes ou de type Train à Grande Vitesse, dont la structure générale est différente de celle d'un véhicule ferroviaire urbain.

Le châssis 10 définit, en partie inférieure, au moins un logement 12 pour un bogie.

Par ailleurs, le châssis 10 définit, en partie supérieure, un espace intérieur de la voiture.

Le châssis 10 comporte une première partie structurelle 14 destinée à former un plancher, au moins une seconde partie structurelle 16 destinées à supporter un siège, et des troisièmes parties structurelles latérales 18 destinées à porter des parois latérales.

Un tel châssis 10 est classique, et ne sera donc pas décrit plus en détail.

Le châssis 10 doit être recouvert d'un habillage intérieur 20 pour que l'espace intérieur puisse accueillir des passagers.

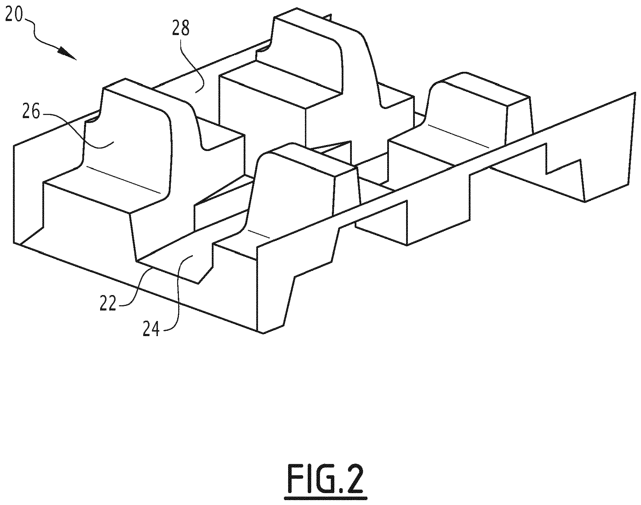

On a représenté, sur la figure 2, un habillage intérieur 20 selon un exemple de mode de réalisation de l'invention.

L'habillage intérieur 20 est formé par une coque 22 moulée d'un seul tenant.

On notera que la coque 22 peut être réalisée par tout procédé de moulage envisageable.

La coque 22 est d'un seul tenant, si bien qu'elle peut être rapportée sur le châssis 10 en une seule opération de montage.

La coque 22 comporte une première partie d'habillage 24 de plancher, destinée à recouvrir la première partie structurelle 14 du châssis 10.

La coque 22 comporte par ailleurs une seconde partie d'habillage 26 de sièges, destinée à recouvrir la seconde partie structurelle 16 du châssis 10.

La coque 22 comporte par ailleurs une troisième partie d'habillage 28 de parois latérale, destinée à recouvrir la troisième partie structurelle 18 du châssis 10.

Dans l'exemple décrit, représenté sur la figure 2, la seconde partie d'habillage 26 forme quatre blocs de sièges, chaque bloc comprenant deux sièges dos-à-dos. Ainsi, chaque siège comporte une assise, et chaque bloc comporte un dossier commun aux deux sièges de ce bloc.

On notera que la coque 22 est conformée pour donner aux sièges leurs formes générales. En variante, ou de manière complémentaire, il sera aussi possible d'ajouter des sièges, des banquettes sur le module 20 sans avoir la nécessité d'être formé par le module.

La coque 22 étant réalisée d'un seul tenant, les première 24 et seconde 26 parties d'habillage sont venues de matière, et en d'autres termes se prolongent l'une l'autre sans discontinuité.

Avantageusement, la coque 22 comporte également une troisième partie d'habillage 28 de parois latérales, destinée à recouvrir la troisième partie structurelle 18 du châssis 10. La coque 22 étant réalisée d'un seul tenant, la troisième partie d'habillage 28 est également venue de matière avec les première 24 et seconde 26 parties d'habillage.

Conformément à un mode de réalisation préféré, la coque 22 est réalisée en un matériau composite, comportant une partie fibres (ou ossature) assurant la tenue mécanique, et un liant, par exemple une résine. Par exemple, de manière non exhaustive, les fibres peuvent comporter des fibres de verre, de carbone, de Kevlar, de chanvre, et/ou d'autres fibres naturelles. Par exemple, de manière non exhaustive, la résine peut comporter un Polyester, de l'Epoxy, du vinylester, des résines naturelles, etc.

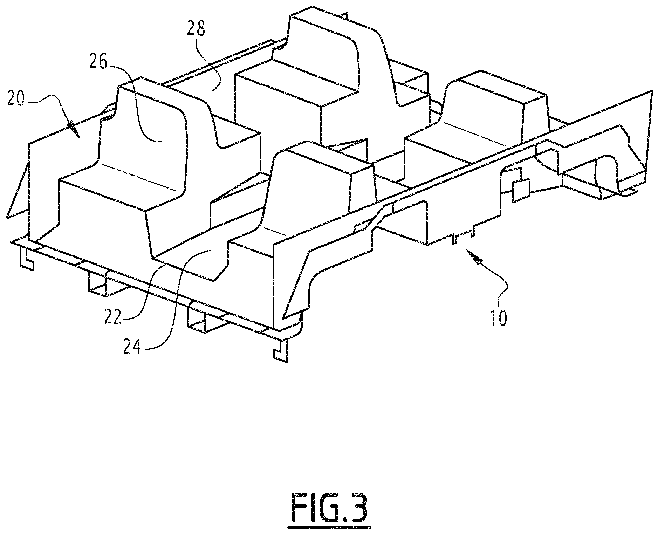

Comme cela est représenté sur la figure 3, la coque 22 est dimensionnée pour recouvrir l'intégralité du châssis 10 de la voiture de véhicule ferroviaire.

Avantageusement, l'habillage 20 comporte des éléments fonctionnels, notamment des éléments d'isolation thermique et/ou phonique, et/ou des éléments de renfort. De tels éléments fonctionnels sont de préférence préalablement assemblés avec la coque 22, pour que l'ensemble de l'habillage puisse être monté en une seule opération de montage.

Les éléments fonctionnels comportent plus particulièrement au moins un élément parmi les suivants :
- une couche d'isolant thermique destinée à recouvrir la première partie structurelle du châssis, et/ou la seconde partie structurelle du châssis,
- une couche d'isolant phonique destinée à recouvrir la première partie structurelle et/ou la seconde partie structurelle du châssis,
- un renfort de plancher, destiné à recouvrir la première partie structurelle du châssis,
- des renforts de siège, destinés à recouvrir la seconde partie structurelle du châssis.

Les éléments fonctionnels peuvent être rapportés sur la coque 22, intégrés à la coque 22, ou en variante formés par la coque 22.

Par exemple, le renfort de plancher peut être formé par un élément de renfort rapporté sous la coque 22, ou en variante peut être formé par la coque 22 qui présente alors une forte épaisseur dans la première partie d'habillage.

De même, les renforts de siège peuvent être formés par des éléments de renfort rapportés sous la coque 22, ou en variante peut être formé par la coque 22 qui présente alors une forte épaisseur dans la seconde partie d'habillage.

On notera que la coque 22 peut en outre porter tout équipement envisageable pouvant être lié à un habillage intérieur.

Il apparait clairement que l'invention permet un montage simplifié de l'habillage 20 sur le châssis 10. Ceci permet également un temps de montage réduit, et un nombre de références de pièces réduit.

En outre, la coque 22 étant réalisée par moulage, celle-ci peut aisément présenter n'importe quelle forme envisageable.

## Revendications

1. Habillage intérieur (20) de voiture de véhicule, notamment de véhicule ferroviaire, destiné à recouvrir au moins partiellement un châssis (10) de ladite voiture de véhicule, le châssis (10) comportant une première partie structurelle (14) formant un plancher et une seconde partie structurelle (16) destinée à supporter au moins un siège, **caractérisé en ce que** l'habillage (20) comporte une coque (22) moulée d'un seul tenant, la coque (22) comportant une première partie (24) d'habillage de plancher et une seconde partie (26) d'habillage de sièges.

2. Habillage intérieur (20) selon la revendication 1, dans lequel la coque (22) comporte une troisième partie (28) d'habillage de parois latérales.

3. Habillage intérieur (20) selon l'une quelconque des revendications précédentes, dans lequel la coque (22) est réalisée en un matériau composite.

4. Habillage intérieur (20) selon l'une quelconque des revendications précédentes, dans lequel la coque (22) est dimensionnée pour recouvrir l'intégralité du châssis (10) de la voiture de véhicule, notamment de véhicule ferroviaire.

5. Habillage intérieur (20) selon l'une quelconque des revendications précédentes, comportant au moins un élément fonctionnel porté par la coque.

6. Habillage intérieur (20) selon la revendication 5, dans lequel chaque élément fonctionnel est choisi parmi :
- une couche d'isolant thermique destinée à recouvrir la première partie structurelle (14) du châssis, et/ou la seconde partie structurelle (16) du châssis, et/ou une troisième partie structurelle (18) du châssis ;
- une couche d'isolant phonique destinée à recouvrir la première partie structurelle (14) et/ou la seconde partie structurelle (16) du châssis, et/ou la troisième partie structurelle (18) du châssis ;
- un renfort de plancher, destiné à recouvrir la première partie structurelle (14) du châssis ; et
- des renforts de siège, destinés à recouvrir la seconde partie structurelle (16) du châssis.

7. Habillage intérieur (20) selon l'une quelconque des revendications précédentes, dans lequel la coque (22) comporte des sièges des passagers et/ou présente des zones de réception de sièges et/ou de banquettes.

8. Voiture de véhicule, notamment de véhicule ferroviaire, comprenant un châssis (10), **caractérisée en ce qu'**elle comporte un habillage intérieur (20) selon l'une quelconque des revendications précédentes, recouvrant le châssis (10).

9. Voiture de véhicule ferroviaire selon la revendication 8, dans laquelle le véhicule ferroviaire est un véhicule de transport urbain et/ou périurbain, notamment un tramway ou un métro.

10. Procédé d'aménagement intérieur d'une voiture de véhicule, notamment de véhicule ferroviaire, la voiture de véhicule comprenant un châssis (10), le procédé comprenant les étapes suivantes :
- fourniture d'un habillage intérieur (20) selon l'une quelconque des revendications 1 à 7 ;
- assemblage de l'habillage intérieur (20) sur le châssis (10).

## Patentansprüche

1. Innenverkleidung (20) eines Waggons, insbesondere eines Schienenfahrzeugs, die zum mindestens teilweise Abdecken eines Fahrgestells (10) des Waggons bestimmt ist, wobei das Fahrgestell (10) einen ersten Strukturteil (14) aufweist, der einen Boden bildet, und einen zweiten Strukturteil (16), der zum Abstützen von mindestens einem Sitz bestimmt ist, **dadurch gekennzeichnet, dass** die Verkleidung (20) eine in einem Stück geformte Schale (22) aufweist, wobei die Schale (22) einen ersten Bodenverkleidungsteil (24) und einen zweiten Sitzverkleidungsteil (26) aufweist.

2. Innenverkleidung (20) nach Anspruch 1, wobei die Schale (22) einen dritten Seitenwandverkleidungsteil (28) aufweist.

3. Innenverkleidung (20) nach einem der vorangehenden Ansprüche, wobei die Schale (22) aus einem Kompositmaterial hergestellt ist.

4. Innenverkleidung (20) nach einem der vorangehenden Ansprüche, wobei die Schale (22) bemessen ist, um die Gesamtheit des Fahrgestells (10) des Waggons, insbesondere eines Schienenfahrzeugs, abzudecken.

5. Innenverkleidung (20) nach einem der vorangehenden Ansprüche, aufweisend mindestens ein von der Schale getragenes Funktionselement.

6. Innenverkleidung (20) nach Anspruch 5, wobei jedes Funktionselement ausgewählt ist aus:
- einer thermischen Isolationsschicht, die zum Abdecken des ersten Strukturteils (14) des Fahrgestells und/oder des zweiten Strukturteils (16) des Fahrgestells und/oder eines dritten Strukturteils (18) des Fahrgestells bestimmt ist;
- einer Schallisolationsschicht, die zum Abdecken des ersten Strukturteils (14) und/oder des zweiten Strukturteils (16) des Fahrgestells und/oder des dritten Strukturteils (18) des Fahrgestells bestimmt ist;
- einer Bodenverstärkung, die zum Abdecken des ersten Strukturteils (14) des Fahrgestells bestimmt ist; und
- der Sitzverstärkungen, die zum Abdecken des zweiten Strukturteils (16) des Fahrgestells bestimmt sind.

7. Innenverkleidung (20) nach einem der vorangehenden Ansprüche, wobei die Schale (22) Passagiersitze und/oder Sitz- und/oder Sitzbankaufnahmezonen aufweist.

8. Waggon, insbesondere eines Schienenfahrzeugs, der ein Fahrgestell (10) aufweist, **dadurch gekennzeichnet, dass** er eine Innenverkleidung (20) nach einem der vorangehenden Ansprüche aufweist, die das Fahrgestell (10) abdeckt.

9. Eisenbahnwaggon nach Anspruch 8, wobei das Schienenfahrzeug ein städtisches und/oder stadtnahes Transportfahrzeug ist, insbesondere eine Tram oder eine Metro.

10. Verfahren zur Inneneinrichtung eines Waggons, insbesondere eines Schienenfahrzeugs, wobei der Waggon ein Fahrgestell (10) umfasst, wobei das Verfahren die folgenden Schritte aufweist:
- Bereitstellen einer Innenverkleidung (20) nach einem der Ansprüche 1 bis 7;
- Verbinden der Innenverkleidung (20) auf dem Fahrgestell (10).

## Claims

1. An interior trim (20) of a vehicle car, in particular a rail vehicle, intended to at least partially cover a frame (10) of said vehicle car, the frame (10) including a first structural part (14) forming a floor and a second structural part (16) intended to support at least one seat, **characterized in that** the trim (20) includes a shell (22) molded in one piece, the shell (22) including a first floor trim part (24) and a second seat trim part (26).

2. The interior trim (20) according to claim 1, wherein the shell (22) includes a third trim part (28) with side walls.

3. The interior trim (20) according to any one of the preceding claims, wherein the shell (22) is made from a composite material.

4. The interior trim (20) according to any one of the preceding claims, wherein the shell (22) is dimensioned to cover the entire frame (10) of the vehicle car, in particular of a rail vehicle.

5. The interior trim (20) according to any one of the preceding claims, including at least one functional element supported by the shell.

6. The interior trim (20) according to claim 5, wherein each functional element is chosen from among:
- a thermally insulating layer intended to cover the first structural part (14) of the frame, and/or the second structural part (16) of the frame, and/or a third structural part (18) of the frame;
- an acoustic insulating layer intended to cover the first structural part (14) and/or the second structural part (16) of the frame, and/or the third structural part (18) of the frame;
- a floor reinforcement, intended to cover the first structural part (14) of the frame; and
- seat reinforcements, intended to cover the second structural part (16) of the frame.

7. The interior trim (20) according to any one of the preceding claims, wherein the shell (22) includes seats for passengers and/or has areas for receiving seats and/or benches.

8. A vehicle car, in particular for a rail vehicle, comprising a frame (10), **characterized in that** it includes an interior trim (20) according to any one of the preceding claims, covering the frame (10).

9. The rail vehicle car according to claim 8, wherein the rail vehicle is an urban and/or suburban transport vehicle, in particular a tram or a subway.

10. A method for laying out the inside of a vehicle car, in particular a rail vehicle car, the vehicle car comprising a frame (10), the method comprising the following steps:
- providing an interior trim (20) according to any one of claims 1 to 7;
- assembling the interior trim (20) on the frame (10).
